# EUROPEAN PATENT SPECIFICATION

(11) **EP 1 645 152 B1**
(45) Date of publication and mention of the grant of the patent: **05.12.2012**
(21) Application number: 04743343.8
(22) Date of filing: 09.07.2004
(51) Int. Cl.: H04W 24/00

(54) **METHOD AND APPARATUS FOR PROFILING CHARACTERISTICS OF MOBILE DEVICES**
VERFAHREN UND VORRICHTUNG FÜR PROFILIERUNGS-CHARAKTERISTIKA MOBILER EINRICHTUNGEN
PROCEDE ET APPAREIL DE DEFINITION DE PROFILS DE CARACTERISTIQUES DE DISPOSITIFS MOBILES

(30) Priority: 09.07.2003 GB 0316096
(43) Date of publication of application: 12.04.2006
(73) Proprietor: Ascom Network Testing Ltd., Elstead Surrey GU8 6LB (GB)
(72) Inventor: PEARCE, James, Arford, Hampshire GU35 8DN (GB); BYTTNER, Anders, S-113 23 Stockholm (SE)
(74) Representative: Gray, Peter John Bracey
(86) International application number: PCT/GB2004/003002
(87) International publication number: WO 2005/006796

(56) References cited:
- WO-A-01/95651
- US-A1- 2002 177 448

## Description

### Field of Invention

This invention relates to a method and apparatus for profiling characteristics of mobile devices. In particular, the invention relates to compiling a database of the attributes of different mobile telephones, smartphones, Personal Digital Assistants (PDAs) and such like.

### Background to the Invention

Mobile telephones were originally intended to handle voice communication. However, for some time now they have also been able to support data communication. Initially, mobile telephones simply used appropriate modems to provide data communication links for portable computers to which they could be connected. However, more recently, a variety of data communication services have been developed by which mobile telephones create, store, display or use the data themselves.

For example, most Global System for Mobile communication (GSM) networks now support a Short Messaging Service (SMS) facility that allows the transmission of short text messages between different mobile telephones or between mobile telephones and appropriate gateways connected to the network. Similarly, many GSM networks have started to support a Multimedia Messaging Service (MMS) facility that effectively extends SMS to pictures and sounds.

Many GSM networks have also introduced data services using Wireless Application Protocol (WAP), which allows mobile telephones to retrieve data from remote servers via a WAP gateway connected to the network. Typically, the data retrieved using WAP comprises pages of Wireless Mark-up Language (WML) encoded data and WAP services are used to retrieve pages of WML encoded data from the internet in a way analogous to the retrieval of pages of Hyper-Text Mark-up Language (HTML) encoded data from the Web.

With the increased use of data communications, the ability of mobile telephones to support data communications and handle data is changing quickly. In particular, diversity in the characteristics and attributes of different mobile telephones associated with data handling is increasing. For example, different mobile telephones may have screens that are monochrome or colour and that vary widely in size, with the result that pictures are displayed differently on different telephones. Similarly, the range of symbols and characters that can be displayed by different mobile telephones may vary, with the result that text may not always be displayed as intended on a mobile telephone. Consequently, it can be difficult for network operators to be confident that users of all mobile telephones that operate in their networks are able to use the supported data services successfully. For example, providers of content for mobile telephone users, such as websites accessible by WAP, cannot be certain that their content can be appropriately viewed on all mobile telephones.

In order to be confident that particular content can be displayed as intended or particular services can be used successfully by all mobile telephones and other mobile devices that might be used in a mobile communication network, it is therefore desirable to test the content or services on the mobile devices. However, as there are a large number of mobile devices available, this is time consuming and laborious. It has therefore been proposed to simulate the characteristics of different mobile devices using computer software. The applicants have developed and marketed one such computer program under the trade name Monitor Master^{™}. This allows content and services to be tested on many different mobile devices by simulating the characteristics of a number of mobile devices at once.

However, in order to simulate a mobile device it is first necessary to test and analyse the mobile devices' characteristics in detail. The applicants have recognised that, with the large number of mobile devices entering the market every year, analysing each and every device to allow appropriate simulation is still laborious and time consuming.

International patent application WO 01/95651 describes a method for testing the ability of text messages to be received by a mobile device. In the method a text message is transmitted from a radio test station to the mobile device and is then returned from the mobile device to the test station. By assessing the text message received from the mobile device, the test station is able to assess the ability of the mobile device to send and receive text messages.

### Summary of Invention

According to the invention, there is therefore provided a method for profiling characteristics of a mobile device, the method comprising: transmitting test data to the mobile device over a mobile telecommunications network for output by the mobile device; providing query data to a user interface defining queries for display by the user interface, which queries concern the expected output of the test data by the mobile device; receiving response data from the user interface defining a response to the query; and storing the response data in a database.

Also according to the present invention, there is provided an apparatus for profiling characteristics of a mobile device, the apparatus comprising: a network interface for transmitting test data to the mobile device over a mobile telecommunications network for output by the mobile device; a processor for providing query data to a user interface for display by the user interface, which query data defines a query concerning the expected output of the test data by the mobile device, and for receiving response data defining a response to the query from the user interface; and a database for storing the response data.

For example, content may be transmitted to a mobile device simultaneously to a question concerning output of the content being displayed on a computer screen. A user can look at the output of the content on the mobile device and answer the query displayed by the computer. The answer can then be stored in a database, either in a memory of the computer or at a remote server. Providing both test data to the mobile device and query data to a user interface allows a database of the different characteristics of the mobile device to be compiled efficiently. In particular, different characteristics of the mobile device can be tested systematically whilst ensuring that the test data is transmitted to the mobile device over the network in the same way as when the mobile device is in normal use.

By transmitting successive items of content at the same time as displaying successive related queries, a database of all appropriate characteristics of the mobile device can be created. It is therefore preferred that successive items of test data are transmitted to the mobile device. In other words, it is preferred that items of test data are transmitted sequentially. Respective queries may concern respective items of test data. Items of test data may therefore be transmitted to the mobile device in an order corresponding with the order that the queries concerning the respective items of test data are provided for display.

The test data may be transmitted to the mobile device over a Global System for Mobile Communication (GSM) network, Interim Standard 95 (IS-95) network or 3^{rd} Generation wireless format (3G) network for example. However, it is particularly preferred that the test data is transmitted to the mobile device using a dedicated data communications link, such as a General Packet Radio Service (GPRS) link. Test data may alternatively or additionally be transmitted to the mobile device using a data messaging service, such as a Short Messaging Service (SMS) facility or a Multimedia Messaging Service (MMS) facility.

Respective items of test data may test single or individual attributes of the mobile device. For example, at least some items of test data may test characteristics of the display of the mobile device, such as whether or not bold text is supported. Similarly at least some items of test data may test communication characteristics of the mobile device, such as the maximum length of Uniform Resource Locator (URL) that is supported. The output of the test data by the mobile device might therefore be the display of the test data, the transmission of data in response to the test data or such like.

The response data may comprise affirmative or negative responses to respective queries. Alternatively, the response data may comprise values for respective queries. Most preferably, the response data comprises only affirmative responses, negative responses and values. This allows the response data for different mobile devices to be easily compared and more simply used for simulation of the mobile device.

The queries can be displayed on the computer screen of any appropriate computer. However, it is preferred that the testing be carried out remotely from the database. The processor might therefore provide the query data to the user interface of a remote computer terminal over a communications link. In particular, it is preferred that the communications link is a computer network such as the internet. The apparatus may therefore be a computer server.

Examples of the invention will now be described with reference to the accompanying drawings.

### Brief Description of the Drawings

Figure 1 is a block diagram illustrating a system for profiling characteristics of mobile devices according to the present invention;
Figure 2 is a flow chart illustrating operation of the system of figure 1;
Figure 3 is a display of some general data stored in profiling database of figure 1;
Figure 4 is a display of an input page for the profiling database of figure 1;
Figure 5 is a display of some data held in the profiling database of figure 1 for a particular mobile device ;
Figure 6 is a display of a start page for an assault course according to the invention;
Figure 7 is a display of a query page for the assault course of figure 5;
   and
Figure 8 is a display of results data stored in the database of figure 1.

### Detailed Description

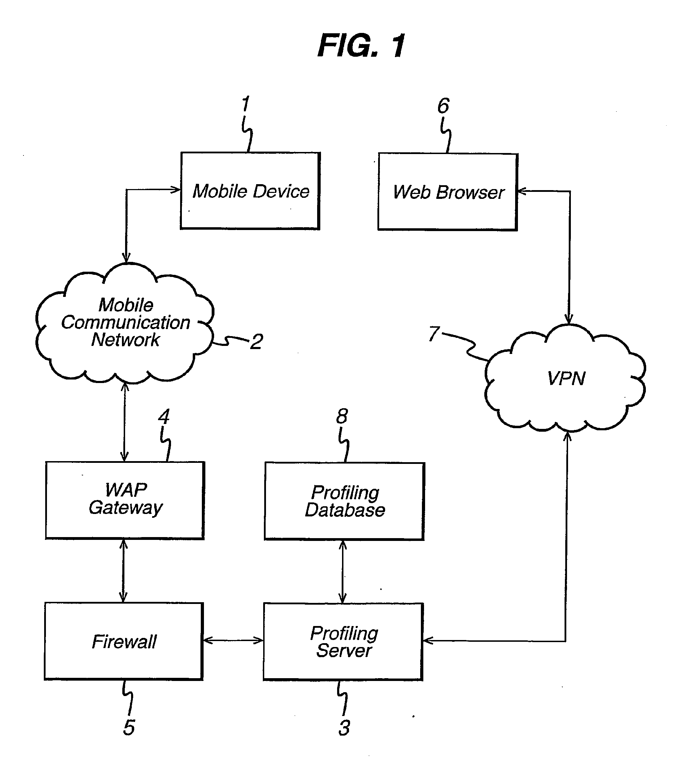

Referring to figure 1, a mobile device 1 is able to communicate in a mobile communication network 2. In this example, the mobile communication network 2 is a radio communications network such as Global System for Mobile communication (GSM) network. However, in other examples, the mobile communication network 2 could be any appropriate type of communication network, including an Interim Standard 95 (IS-95) network or 3^{rd} Generation wireless format (3G) network for example.

A profiling server 3 is arranged to communicate with the mobile device 1 over the mobile communication network 2. In order to achieve this, the profiling server 3 is connected to a Wireless Application Protocol (WAP) gateway 4 via a firewall 5. The WAP gateway 4 is operable to receive data intended for the mobile device 1 from the profiling server 3, typically as Wireless Mark-up Language (WML) encoded data or Hypertext Mark-Up Language (HTML) encoded data. The WAP gateway 4 can then transmit the data, as with WML encoded data, Short Messaging Service (SMS) messages or Multimedia Messaging Service (MMS) messages, to the infrastructure of the network 2 for transmission (e.g. radio transmission) to the mobile device 1. The WAP gateway 4 is also able pass on data received from the mobile device 1, such as WAP commands, Unique Resource Locators (URLs) and such like, to the profiling server 3. The firewall 5 operates in a conventional manner to filter communications between the profiling server 3 and the WAP gateway 4 and improve security.

The profiling server 3 is also arranged to communicate with a web browser 6. In this example, the profiling server 3 is a web server and the web browser 6 is installed on a remote personal computer. The profiling server 3 and web browser 6 communicate over a Virtual Private Network (VPN) 7. In another example, the profiling server 3 and web browser 6 communicate over an intranet or any other suitable computer network or communications link. In yet another example, the profiling server 3 and web browser 6 are integrated in a single computer. The profiling server 3 is able to output data to the web browser 6 in the form of Hyper-Text Mark-Up Language (HTML) or Java^{™} encoded data.

The profiling server 3 is associated with a profiling database 8. The profiling database 8 is typically a dedicated memory, such as a hard-disk, in a server distinct from the profiling server 3. This improves the robustness of the system. However, in other examples, the profiling database 8 is stored in a memory, such as a hard-disk, integrated with the profiling server 3. The database 8 is compliant with an appropriate Structured Query Language (i.e. is SQL compliant) to allow the data stored in the database 8 to be stored and retrieved effectively. The database 8 includes a list of mobile devices 1 that have been or are to be tested. The database 8 also stores assault courses that are used to test the mobile devices 1, as described in more detail below, along with the results of the assault courses that have been completed by different mobile devices 1.

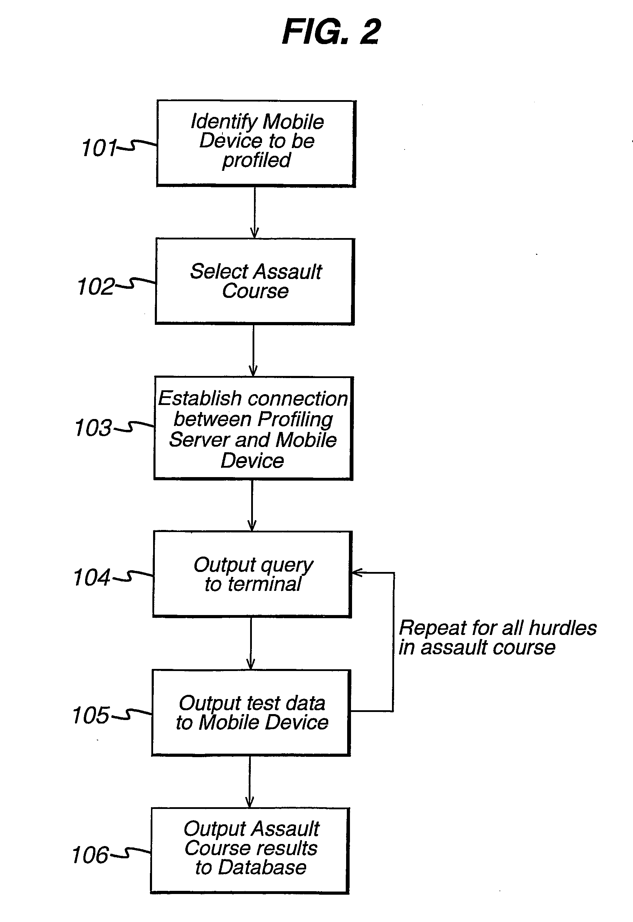

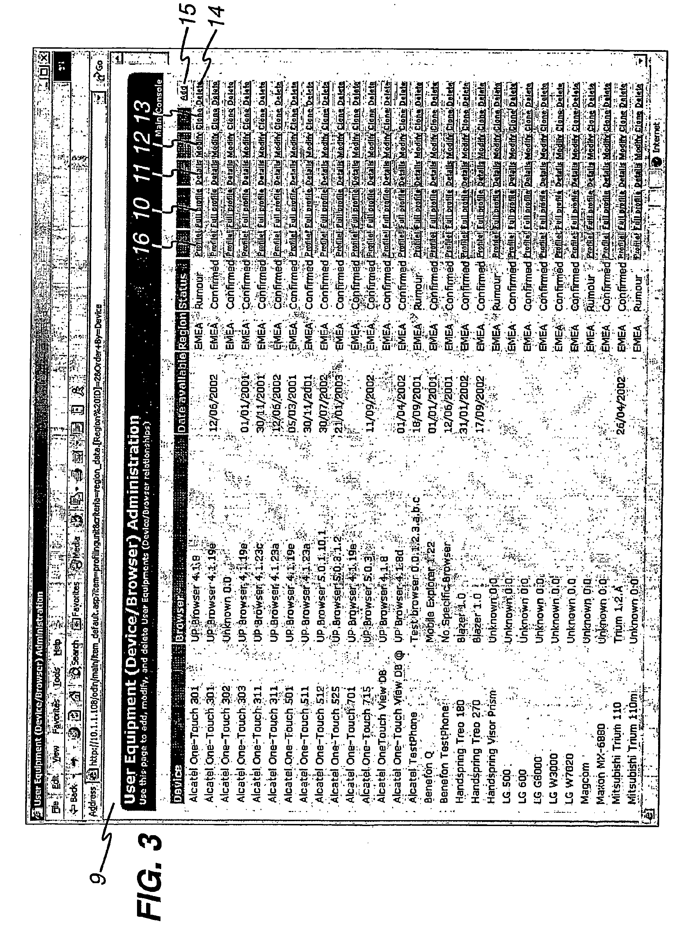

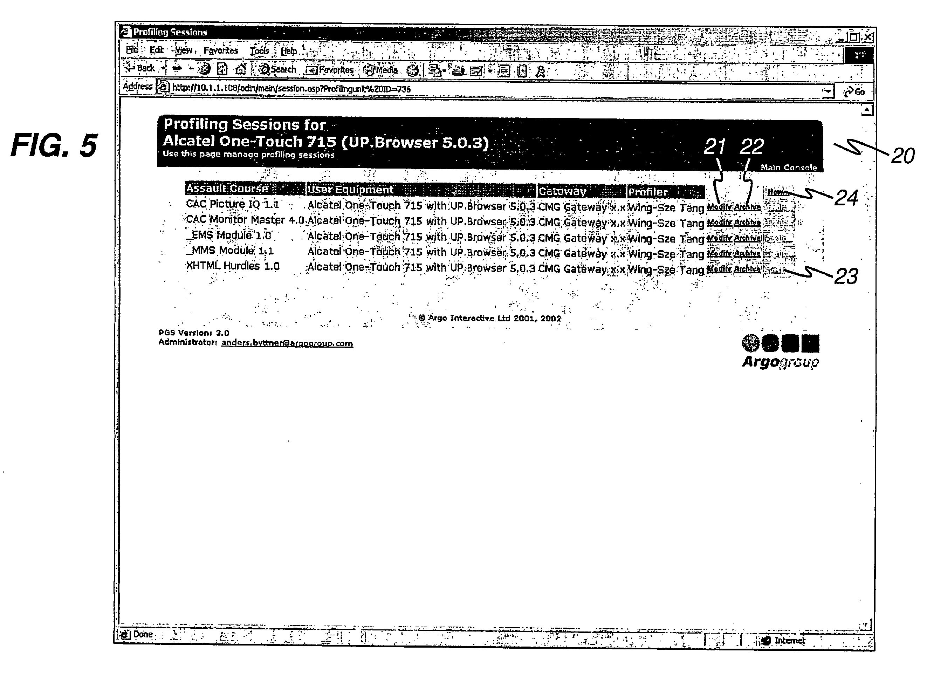

When it is desired to test a mobile device 1, a user first ensures that details of the mobile device 1 to be tested are in the database 8. This is shown as step 101 in the flowchart of figure 2. In more detail, the web browser 6 retrieves a user equipment administration page 9, as shown in figure 3, from the profiling server 3. The user equipment administration page 9 is an HTML page generated by the profiling server 3 from the database 8, listing general details of all the mobile devices 1 in the database 8, such as their names, manufacturers' reference numbers and such like. More specifically, in this example the user equipment administration page 9 includes for each mobile device 1: the name of the mobile device 1; the type of browser installed on the mobile device 1; the data on which the mobile device 1 was or is to be made available; the region in which the mobile device is (to be made) available; and a note of whether or not launch of the mobile device is confirmed or rumoured. In addition, the user equipment administration page 9 includes hyperlinks to other HTML pages for each mobile device 1 that display more detailed general data for the mobile devices or initiate desired actions. For example, there is a full profile hyperlink 10 for each mobile device 1 on the user equipment administration page 9 to an HTML page (not shown) displaying all the recorded characteristics of the respective mobile device 1. For each mobile device 1 there is also a details hyperlink 11 to an HTML page that displays further general details for the respective mobile device 1; a modify hyperlink 12 that allows the general details of the respective mobile device 1 to be amended; a clone hyperlink 13 that allows the general details of the respective mobile device 1 to be copied to a new entry on the database 8; and a delete hyperlink 14 that allows the entry for the respective mobile device 1 to be erased. Finally, there is a profile hyperlink 16 for each mobile device 1 to a profiling sessions page 20, as shown in figure 5. Thus, once a user has located the appropriate mobile device 1 on the user equipment administration page 9 and reviewed the general details for the device 1 as appropriate, the user can follow the profile hyperlink 16 to the profiling sessions page 20 to begin profiling the mobile device 1.

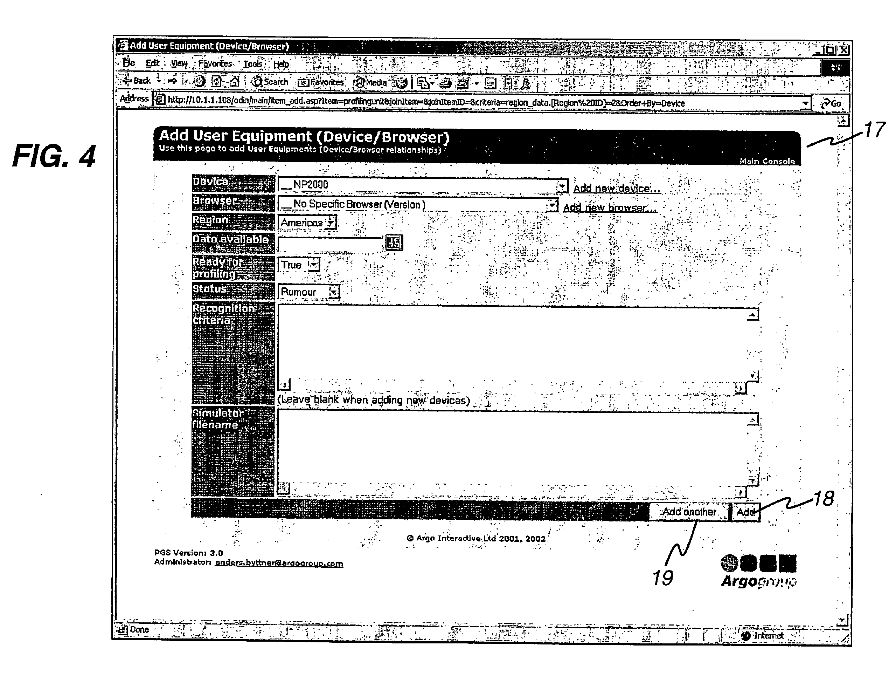

If the mobile device 1 to be tested is not listed in the database 8, the user can follow an add hyperlink 15 provided in the top right hand corner of the user equipment administration page 9. The add hyperlink 15 retrieves an add user equipment page 17, as shown in figure 4, from the profiling server 3. The add user equipment page 17 is a wizard or form that allows a user to enter general details for the new mobile device 1 using the user interface (not shown) of the web browser 6. In this example, the add user equipment page 17 allows the name of the mobile device 1, the browser it supports, the region in which it is to be made available, the date on which it was or is to be made available, whether or not the mobile device 1 is ready for profiling and whether or not launch of the mobile device is confirmed or just rumoured, along with any extra comments that may be appropriate. On the add user equipment page 17, an add hyperlink 18 causes the browser 6 to submit the entered details to the profiling server 3, which in turn stores the entered details in the database 8. In this example, there is also an add another hyperlink 19 that not only causes the browser 6 to submit the entered details to the profiling server 3, but also refreshes the add user equipment page 17 on the browser 6 to allow the user to enter the details of another mobile device 1 if desired. Once details for the mobile device 1 have been stored in the profiling database 8, the user can follow the profile hyperlink 16 to the profiling sessions page 20 to begin profiling the mobile device 1.

The profiling sessions page 20 lists details of any assault courses that have already been completed for the selected mobile device 1. In the example shown in figure 5, the completed assault courses for an Alcatel One-Touch 715 on which an UP.Browser 5.0.3 is installed are displayed. It can be seen that a CAC Picture IQ 1.1, a CAC Monitor Master 4.0, an _EMS Module 1.0, an_MMS Module 1.1 and an XHTML Hurdles 1.1 assault course have been completed for this mobile device 1. There is a modify hyperlink 21 for each completed assault course to an HTML page (not shown) that displays the results of the assault course and allows the results to be amended. An archive hyperlink 22 for each completed assault course allows the results of the assault course to be removed from the database 8 to an archive. A profile hyperlink 23 for each completed assault course allows the respective assault course to be repeated. However, it is most often desired to complete a new assault course which is achieved by following a new hyperlink 24 at the top right hand corner of the profiling sessions page 20. This causes a select assault course page (not shown) to be retrieved from the profiling server 3 by the browser 6.

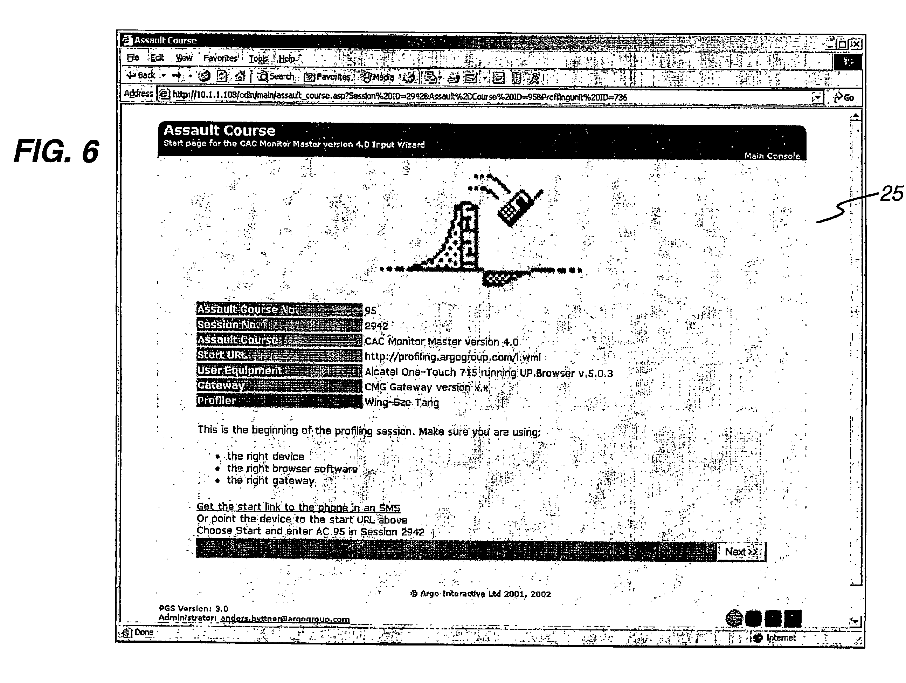

The select assault course page contains hyperlinks to all appropriate assault courses for the mobile device 1. Different assault courses test different characteristics of the mobile device 1. For example, there might be separate assault courses for WAP services, SMS services and MMS services. When a user chooses to complete an assault course, an assault course start page 25, as shown in figure 6, is retrieved from the profiling server 3 and displayed by the browser 6. This step is shown as step 102 in figure 2.

The assault course start page 25 includes a summary of the assault course details. In this example, it also prompts the user to connect the mobile device 1 to the profiling server 3 using the Uniform Resource Locator (URL) specified on the start page 25. Typically, a user is required to turn the mobile device 1 on, establish a connection with the network 2 which may be achieved automatically by the mobile device 1 or require the user to select a GPRS connection or such like. Finally, the user enters the URL specified on the start page 25 on the browser of the mobile device 1 to establish a connection with the profiling server 3. This is shown as step 103 in figure 2. The user then follows the next hyperlink link 8 in the bottom right hand corner of the start page 25 screen to start the assault course.

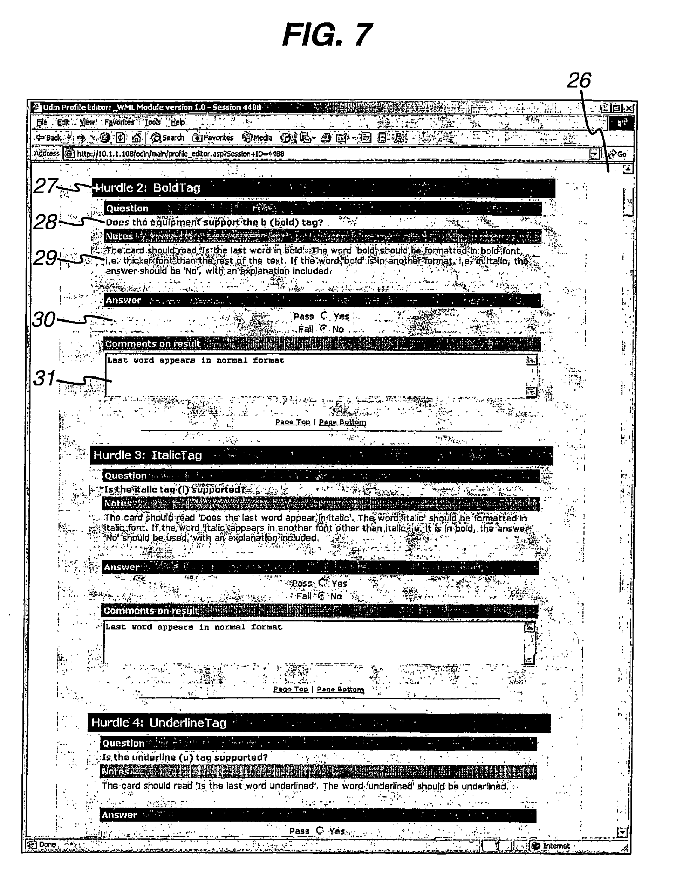

In response to the next hyperlink 8 being followed, the profiling server 3 outputs a query page 26, as shown in figure 7, to the web browser 6. This is shown as step 104 in figure 2. The query page 26 is a wizard or form that lists queries, referred to as "hurdles", concerning the output of test data by the mobile device 1. Each hurdle is displayed as a title bar 27, a question 28, notes 29 explaining the question where necessary, an answer input box 30 in which the answer to the question can be input via the user interface and a comment input box 31 in which additional comments can be input via the user interface if desired. At the same time as outputting the query page 26 for display, the profiling server 3 outputs test data related to the hurdles to the mobile device 1. More specifically, the profiling server 3 outputs items of test data, such as a page of WML encoded data, an SMS message or an MMS message to the mobile device 1. This is shown as step 105 in figure 2. Each item of test data is related to a hurdle on the query page 26.

The profiling server 3 therefore outputs the items of test data to the mobile device in an order in which the associated hurdles appear on the query page 26. The user observes the output of the data item associated with the first hurdle on the mobile device 1 and answers the first hurdle question in the appropriate answer input box 30. The user then operates the mobile device 1 to output the data item associated with the next hurdle received from the profiling server 3. Typically, the user simple follows a next hyperlink on the display of the mobile device 1 to cause the mobile device 1 to output the next data item. In another example, the profiling server 3 may be adapted to push data to the mobile device 1 and output of data items on the mobile device 1 may be activated automatically or controlled by clicking links on the query page 26.

When a user has completed the answers to all of the hurdles on the query page 26, the user submits the page to the profiling server 3 by following a hyperlink (not shown) at the bottom of the query page 26. Further query pages 26 can then be sent to the web-browser 6 as desired until the assault course is completed. The profiling server 3 stores the answers to the hurdle questions in the profiling database 8. This is shown as step 106 in figure 2.

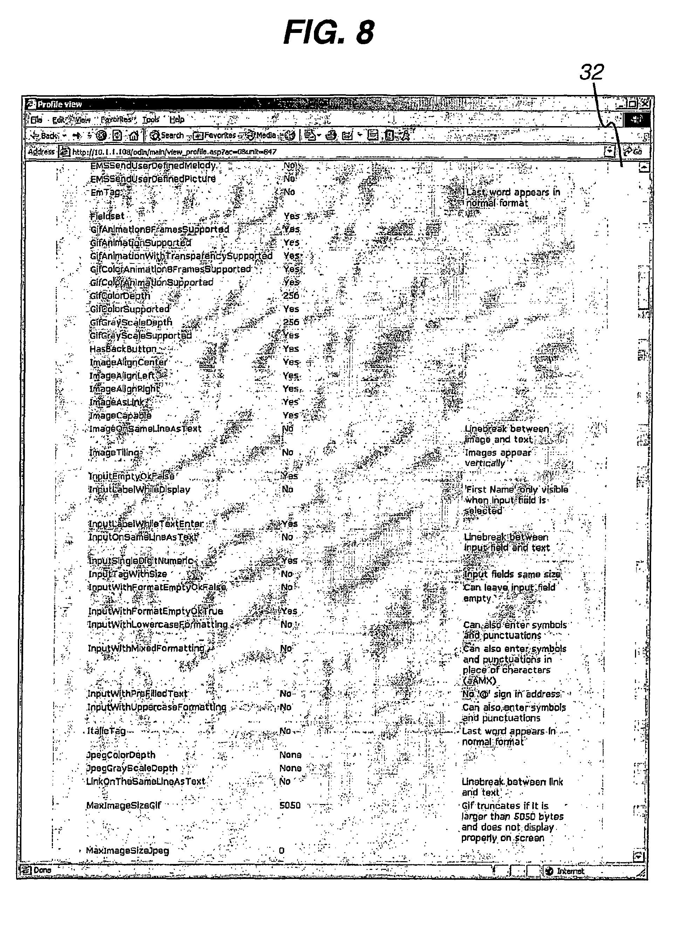

The results stored in the database can be reviewed by a user on the web-browser 6. In this example, when the assault course has been completed, a results page 32, as shown in figure 8, is output by the profiling server 3 to the web-browser 6. The results page 32 sets out the hurdle titles, answers and additional comments.

Different hurdles test different characteristics of the mobile device 1. One category of hurdles test whether or not a feature is supported. The answer to the query for such a hurdle is yes or no, i.e. affirmative or negative. The item of test data for such a hurdle isolates the feature to be tested, so that it is straightforward to identify whether or not the feature is supported. For example, the ability of the mobile device 1 to display a colour image is tested by transmitting a colour image as an item of test data and asking if a colour image is displayed as a query. Similarly, the ability of the mobile device 1 to display bold text is tested by transmitting two words of text, the second in bold, as an item of test data and asking if the second word is displayed in bold as a query. In another example, the ability of the mobile device 1 to play a ringtone is tested by transmitting the ringtone to the mobile device 1 (e.g. in an SMS message) and asking whether or not it is played by the mobile device in a query.

Another category of hurdles test dimensional limits to which features of the mobile device extend. The answer to the query for such a hurdle is a value. The items of test data for such a hurdle comprise data that incrementally increases in size so that the maximum supported size can be identified. For example, an image can be transmitted that grows in size (or successive larger images can be transmitted). When the image no longer fits on the display screen of the mobile device 1, the largest successfully displayed image size can be recorded on the query page 26. In another example a page of WML encoded data can be transmitted that causes the mobile device to transmit a URL to the profiling server that recursively links back on itself and grows in length. When the mobile device 1 is no longer able to transmit the URL (e.g. no further URL is received at the WAP gateway 4 from the mobile device 1), the profiling server 3 can retrieve the length of the longest received URL and up-date the query page 26 with this information. Thus, the maximum length URL supported by the mobile device 1 can be recorded.

Another category of hurdles can test several attributes of the mobile device 1 at once. For example, a WML page containing several different characters can be transmitted to the mobile device 1 as test data. The query page 26 displays the same characters and a user identifies any characters that are not properly displayed by the mobile device 1. The user can then update the query page 26 with the code numbers of the characters not supported by the mobile device 1.

Yet another category of hurdles can test the communication attributes of the mobile device 1. For example, the mobile device 1 can be caused to retrieve dummy content from the profiling server 3 using WAP. The request for the content can be recorded by the profiling server and used to update the query page 26. In particular, the header of the request can be recorded, as this is particularly useful information when simulating mobile devices.

Only an example of the invention is described above and appropriate modifications and variations will be evident to those skilled in the field. In particular, the above list of hurdles is illustrative rather than exhaustive.

## Claims

1. A method for profiling characteristics of a mobile device (1), the method comprising:
transmitting test data to the mobile device (1) over a mobile communications network (2) for output by the mobile device (1);
providing query data to a user interface (6) ;
receiving response data from the user interface (6); and
storing the response data in a database (8),
**characterised in that**
the query data defines queries for display by the user interface (6), which queries concern the expected output of the test data by the mobile device (1), and
the response data defines a response to the query.

2. The method of claim 1, wherein the test data is transmitted to the mobile device (1) using a dedicated data communications link.

3. The method of claim 1 or claim 2, wherein the test data is transmitted to the mobile device (1) using a data messaging service.

4. The method of any one of the preceding claims, wherein the test data is transmitted to the mobile device (1) substantially simultaneously to the query data being provided to the user interface (6).

5. The method of any one of the preceding claims, wherein respective queries concern respective items of test data.

6. The method of any one of the preceding claims, wherein items of test data are transmitted to the mobile device (1) in an order corresponding with an order in which queries concerning the respective items of test data are provided for display.

7. The method of any one of the preceding claims, wherein respective items of test data test individual attributes of the mobile device (1).

8. The method of any one of the preceding claims, wherein at least some items of test data test characteristics of the display of the mobile device (1).

9. The method of any one of the preceding claims, wherein output of at least some items of test data comprises display of the test data.

10. The method of any one of the preceding claims, wherein at least some of the items of test data test communication characteristics of the mobile device (1).

11. The method of any one of the preceding claims, wherein output of at least some items of test data comprises transmission of data over the mobile communications network (2).

12. The method of any one of the preceding claims, wherein the response data comprises affirmative or negative response to respective queries.

13. The method of any one of the preceding claims, wherein the response data comprises values for respective queries.

14. The method of any one of the preceding claims, wherein the response data comprises only affirmative responses, negative responses and values.

15. A method of profiling the characteristics of plural mobile devices (1) by carrying out the method of any one of the preceding claims for each of mobile device (1).

16. Computer software adapted to carry out the method of any one of the preceding claims when processed by a computer.

17. An apparatus for mobiling characteristics of a mobile device (1), the apparatus comprising
a network interface (4) for transmitting test data to the mobile device (1) over a mobile communications network (2) for output by the mobile device (1);
a processor (3) for providing query data to a user interface (6) for display by the user interface (6) and for receiving response data from the user interface (6);
and a database (8) for storing the response data,
**characterised in that**
the query data defines a query concerning the expected output of the test data by the mobile device (1) and
the response data defines a response to the query.

18. The apparatus of claim 17, wherein the network interface (4) transmits the test data to the mobile device (1) using a dedicated data communications link.

19. The apparatus of claim 17 or claim 18, wherein the network interface (4) transmits the test data to the mobile device (1) using a data messaging service.

20. The apparatus of any one of claims 17 to 19, wherein the network interface (4) transmits the test data to the mobile device (1) substantially simultaneously to the processor (3) providing query data to the user interface (6).

21. The apparatus of any one of claims 17 to 20, wherein respective queries concern respective items of test data.

22. The apparatus of any one of claims 17 to 21, wherein the network interface transmits items of test data to the mobile device (1) in an order corresponding with an order in which queries concerning the respective items of test data are provided for display.

23. The apparatus of any one of claims 17 to 22, wherein respective items of test data test individual attributes of the mobile device (1).

24. The apparatus of any one of claims 17 to 23, wherein at least some items of test data test characteristics of the display of the mobile device (1).

25. The apparatus of any one of claims 17 to 24, wherein output of at least some items of test data comprises display of the test data.

26. The apparatus of any one of claims 17 to 25, wherein at least some items of test data test communication characteristics of the mobile device (1).

27. The apparatus of any one of claim 17 to 26, wherein output of at least some items of test data comprises transmission of data over the mobile telecommunications network (2).

28. The apparatus of any one of claims 17 to 27, wherein the response data comprises affirmative or negative responses to respective queries.

29. The apparatus of any one of claims 17 to 28, wherein the response data comprises values for respective queries.

30. The apparatus of any one of claims 17 to 29, wherein the response data comprises only affirmative responses, negative responses and values.

31. The apparatus of any one of claims 17 to 30, wherein the processor (3) provides the query data to the user interface (6) of a remote computer terminal over a communications link (7).

32. A computer server comprising the apparatus of any one of claims 17 to 31.

## Patentansprüche

1. Verfahren zum Profilieren von Charakteristika einer mobilen Einrichtung (1), wobei das Verfahren folgendes umfasst:
Übertragen von Testdaten an die mobile Einrichtungen (1) über ein mobiles Kommunikationsnetzwerk (2) zur Ausgabe durch die mobile Einrichtung (1);
Liefern von Abfragedaten an eine Benutzerschnittstelle (6);
Empfangen von Antwortdaten von der Benutzerschnittstelle (6); und
Speichern der Antwortdaten in einer Datenbank (8),
**dadurch gekennzeichnet, dass**
die Abfragedaten Abfragen zur Anzeige durch die Benutzerschnittstelle (6) definieren, wobei die Abfragen die erwartete Ausgabe der Testdaten durch die mobile Einrichtung (1) betreffen, und
die Antwortdaten eine Antwort auf die Abfrage definieren.

2. Verfahren nach Anspruch 1, wobei die Testdaten über eine eigene Datenkommunikationsstrecke an die mobile Einrichtung (1) übertragen werden.

3. Verfahren nach Anspruch 1 oder 2, wobei die Testdaten unter Verwendung eines Datennachrichtendienstes an die mobile Einrichtung (1) übertragen werden.

4. Verfahren nach einem der vorhergehenden Ansprüche, wobei die Testdaten im wesentlichen simultan zu den an die Benutzerschnittstelle (6) gelieferten Abfragedaten an die mobile Einrichtung (1) übertragen werden.

5. Verfahren nach einem der vorhergehenden Ansprüche, wobei jeweilige Abfragen jeweilige Elemente von Testdaten betreffen.

6. Verfahren nach einem der vorhergehenden Ansprüche, wobei Elemente von Testdaten an die mobile Einrichtung (1) in einer Reihenfolge übertragen werden, die einer Reihenfolge entspricht, in der die jeweiligen Elemente von Testdaten betreffende Abfragen zur Anzeige geliefert werden.

7. Verfahren nach einem der vorhergehenden Ansprüche, wobei jeweilige Elemente von Testdaten individuelle Attribute der mobilen Einrichtung (1) testen.

8. Verfahren nach einem der vorhergehenden Ansprüche, wobei mindestens einige Elemente von Testdaten Charakteristika der Anzeige der mobilen Einrichtung (1) testen.

9. Verfahren nach einem der vorhergehenden Ansprüche, wobei die Ausgabe mindestens einiger Elemente von Testdaten die Anzeige der Testdaten umfasst.

10. Verfahren nach einem der vorhergehenden Ansprüche, wobei mindestens einige der Elemente von Testdaten Kommunikationscharakteristika der mobilen Einrichtung (1) testen.

11. Verfahren nach einem der vorhergehenden Ansprüche, wobei die Ausgabe mindestens einiger Elemente von Testdaten die Übertragung von Daten über das Mobilkommunikationsnetzwerk (2) umfasst.

12. Verfahren nach einem der vorhergehenden Ansprüche, wobei die Antwortdaten eine bestätigende oder negative Antwort auf jeweilige Abfragen umfassen.

13. Verfahren nach einem der vorhergehenden Ansprüche, wobei die Antwortdaten Werte für jeweilige Abfragen umfassen.

14. Verfahren nach einem der vorhergehenden Ansprüche, wobei die Antwortdaten nur bestätigende Antworten, negative Antworten und Werte umfassen.

15. Verfahren zum Profilieren der Charakteristika von mehreren mobilen Einrichtungen (1) durch Ausführen des Verfahrens nach einem der vorhergehenden Ansprüche für jede der mobilen Einrichtungen (1).

16. Computersoftware, die ausgelegt ist zum Ausführen des Verfahrens nach einem der vorhergehenden Ansprüche bei Verarbeitung durch einen Computer.

17. Vorrichtung zum Profilieren von Charakteristika einer mobilen Einrichtung (1), wobei die Vorrichtung folgendes umfasst:
eine Netzwerkschnittstelle (4) zum Übertragen von Testdaten an die mobile Einrichtung (1) über ein Mobilkommunikationsnetzwerk (2) zur Ausgabe durch die mobile Einrichtung (1);
einen Prozessor (3) zum Liefern von Abfragedaten an eine Benutzerschnittstelle (6) zur Anzeige durch die Benutzerschnittstelle (6) und zum Empfangen von Antwortdaten von der Benutzerschnittstelle (6);
und eine Datenbank (8) zum Speichern der Antwortdaten,
**dadurch gekennzeichnet, dass**
die Abfragedaten eine Abfrage hinsichtlich der erwarteten Ausgabe der Testdaten durch die mobile Einrichtung (1) definiert und
die Antwortdaten eine Antwort auf die Abfrage definieren.

18. Vorrichtung nach Anspruch 17, wobei die Netzwerkschnittstelle (4) die Testdaten unter Verwendung einer eigenen Datenkommunikationsstrecke an die mobile Einrichtung (1) überträgt.

19. Vorrichtung nach Anspruch 17 oder 18, wobei die Netzwerkschnittstelle (4) die Testdaten unter Verwendung eines Datenübermittlungsdienstes an die mobile Einrichtung (1) überträgt.

20. Vorrichtung nach einem der Ansprüche 17 bis 19, wobei die Netzwerkschnittstelle (4) die Testdaten an die mobile Einrichtung (1) im wesentlichen simultan dazu überträgt, dass der Prozessor (3) Abfragedaten an die Benutzerschnittstelle (6) liefert.

21. Vorrichtung nach einem der Ansprüche 17 bis 20, wobei jeweilige Abfragen jeweilige Elemente von Testdaten betreffen.

22. Vorrichtung nach einem der Ansprüche 17 bis 21, wobei die Netzwerkschnittstelle Elemente von Testdaten an die mobile Einrichtung (1) in einer Reihenfolge überträgt, die eine Reihenfolge entspricht, in der die jeweiligen Elemente von Testdaten betreffende Abfragen zur Anzeige geliefert werden.

23. Vorrichtung nach einem der Ansprüche 17 bis 22, wobei jeweilige Elemente von Testdaten individuelle Attribute der mobilen Einrichtung (1) testen.

24. Vorrichtung nach einem der Ansprüche 17 bis 23, wobei mindestens einige Elemente von Testdaten Charakteristika der Anzeige der mobilen Einrichtung (1) testen.

25. Vorrichtung nach einem der Ansprüche 17 bis 24, wobei die Ausgabe mindestens einiger Elemente von Testdaten die Anzeige der Testdaten umfasst.

26. Vorrichtung nach einem der Ansprüche 17 bis 25, wobei mindestens einige Elemente von Testdaten Kommunikationscharakteristika der mobilen Einrichtung (1) testen.

27. Vorrichtung nach einem der Ansprüche 17 bis 26, wobei die Ausgabe mindestens einiger Elemente von Testdaten die Übertragung von Daten über das Mobiltelekommunikationsnetzwerk (2) umfasst.

28. Vorrichtung nach einem der Ansprüche 17 bis 27, wobei die Antwortdaten bestätigende oder negative Antworten auf jeweilige Abfragen umfassen.

29. Vorrichtung nach einem der Ansprüche 17 bis 28, wobei die Antwortdaten Werte für jeweilige Abfragen umfassen.

30. Vorrichtung nach einem der Ansprüche 17 bis 29, wobei die Antwortdaten nur bestätigende Antworten, negative Antworten und Werte umfassen.

31. Vorrichtung nach einem der Ansprüche 17 bis 30, wobei der Prozessor (3) die Abfragedaten an die Benutzerschnittstelle (6) eines abgesetzten Computerterminals über eine Kommunikationsstrecke (7) liefert.

32. Computerserver, der die Vorrichtung nach einem der Ansprüche 17 bis 31 umfasst.

## Revendications

1. Procédé de profilage de caractéristiques d'un dispositif mobile (1), le procédé comprenant :
la transmission de données d'essai au dispositif mobile (1) sur un réseau de communications mobiles (2) pour une sortie par le dispositif mobile (1) ;
la fourniture de données d'interrogation à une interface utilisateur (6) ;
la réception de données de réponse provenant de l'interface utilisateur (6) ; et
le stockage des données de réponse dans une base de données (8),
**caractérisé en ce que**
les données d'interrogation définissent des interrogations pour affichage par l'interface utilisateur (6), lesquelles interrogations concernent la sortie attendue des données d'essai dans le dispositif mobile (1), et
les données de réponse définissent une réponse à l'interrogation.

2. Procédé selon la revendication 1, dans lequel les données d'essai sont transmises au dispositif mobile (1) à l'aide d'une liaison de communications de données dédiée.

3. Procédé selon la revendication 1 ou la revendication 2, dans lequel les données d'essai sont transmises au dispositif mobile (1) à l'aide d'un service de messagerie de données.

4. Procédé selon l'une quelconque des revendications précédentes, dans lequel les données d'essai sont transmises au dispositif mobile (1) sensiblement simultanément à la fourniture des données d'interrogation à l'interface utilisateur (6).

5. Procédé selon l'une quelconque des revendications précédentes, dans lequel les interrogations respectives concernent des articles respectifs de données d'essai.

6. Procédé selon l'une quelconque des revendications précédentes, dans lequel des articles de données d'essai sont transmis au dispositif mobile (1) dans un ordre correspondant à un ordre dans lequel des interrogations concernant les articles respectifs de données d'essai sont fournies pour affichage.

7. Procédé selon l'une quelconque des revendications précédentes, dans lequel des articles respectifs de données d'essai évaluent des attributs individuels du dispositif mobile (1).

8. Procédé selon l'une quelconque des revendications précédentes, dans lequel au moins certains articles des données d'essai évaluent des caractéristiques de l'affichage du dispositif mobile (1).

9. Procédé selon l'une quelconque des revendications précédentes, dans lequel une sortie d'au moins certains articles de données d'essai comprend un affichage des données d'essai.

10. Procédé selon l'une quelconque des revendications précédentes, dans lequel au moins certains des articles des données d'essai évaluent des caractéristiques de communication du dispositif mobile (1).

11. Procédé selon l'une quelconque des revendications précédentes, dans lequel une sortie d'au moins certains articles de données d'essai comprend la transmission de données sur le réseau de communications mobiles (2).

12. Procédé selon l'une quelconque des revendications précédentes, dans lequel les données de réponse comprennent une réponse affirmative ou négative à des interrogations respectives.

13. Procédé selon l'une quelconque des revendications précédentes, dans lequel les données de réponse comprennent des valeurs pour des interrogations respectives.

14. Procédé selon l'une quelconque des revendications précédentes, dans lequel les données de réponse comprennent seulement des réponses affirmatives, des réponses négatives et des valeurs.

15. Procédé de profilage des caractéristiques de plusieurs dispositifs mobiles (1) en réalisant le procédé de l'une quelconque des revendications précédentes pour chacun des dispositifs mobiles (1).

16. Logiciel informatique adapté pour réaliser le procédé de l'une quelconque des revendications précédentes lorsqu'il est traité par un ordinateur.

17. Appareil de profilage de caractéristiques d'un dispositif mobile (1), l'appareil comprenant :
une interface réseau (4) pour transmettre des données d'essai au dispositif mobile (1) sur un réseau de communications mobiles (2) pour une sortie par le dispositif mobile (1) ;
un processeur (3) pour fournir des données d'interrogation à une interface utilisateur (6) pour un affichage par l'interface utilisateur (6) et pour recevoir des données de réponse provenant de l'interface utilisateur (6) ;
et une base de données (8) pour stocker les données de réponse,
**caractérisé en ce que**
les données d'interrogation définissent une interrogation concernant la sortie attendue des données d'essai par le dispositif mobile (1) et
les données de réponse définissent une réponse à l'interrogation.

18. Appareil selon la revendication 17, dans lequel l'interface réseau (4) transmet les données d'essai au dispositif mobile (1) à l'aide d'une liaison de communications de données dédiée.

19. Appareil selon la revendication 17 ou la revendication 18, dans lequel l'interface réseau (4) transmet les données d'essai au dispositif mobile (1) à l'aide d'un service de messagerie de données.

20. Appareil selon l'une quelconque des revendications 17 à 19, dans lequel l'interface réseau (4) transmet les données d'essai au dispositif mobile (1) sensiblement simultanément à la fourniture par le processeur (3) de données d'interrogation à l'interface utilisateur (6).

21. Appareil selon l'une quelconque des revendications 17 à 20, dans lequel des interrogations respectives concernent des articles respectifs de données d'essai.

22. Appareil selon l'une quelconque des revendications 17 à 21, dans lequel l'interface réseau transmet des articles de données d'essai au dispositif mobile (1) dans un ordre correspondant à un ordre dans lequel des interrogations concernant les articles respectifs de données d'essai sont fournies pour affichage.

23. Appareil selon l'une quelconque des revendications 17 à 22, dans lequel des articles respectifs de données d'essai évaluent des attributs individuels du dispositif mobile (1).

24. Appareil selon l'une quelconque des revendications 17 à 23, dans lequel au moins certains articles de données d'essai évaluent des caractéristiques de l'affichage du dispositif mobile (1).

25. Appareil selon l'une quelconque des revendications 17 à 24, dans lequel une sortie d'au moins certains articles de données d'essai comprend l'affichage des données d'essai.

26. Appareil selon l'une quelconque des revendications 17 à 25, dans lequel au moins certains articles de données d'essai évaluent des caractéristiques de communication du dispositif mobile (1).

27. Appareil selon l'une quelconque des revendications 17 à 26, dans lequel une sortie d'au moins certains articles de données d'essai comprend la transmission de données sur le réseau de télécommunications mobiles (2).

28. Appareil selon l'une quelconque des revendications 17 à 27, dans lequel les données de réponse comprennent des réponses affirmatives ou négatives à des interrogations respectives.

29. Appareil selon l'une quelconque des revendications 17 à 28, dans lequel les données de réponse comprennent des valeurs pour des interrogations respectives.

30. Appareil selon l'une quelconque des revendications 17 à 29, dans lequel les données de réponse comprennent uniquement des réponses affirmatives, des réponses négatives et des valeurs.

31. Appareil selon l'une quelconque des revendications 17 à 30, dans lequel le processeur (3) fournit les données d'interrogation à l'interface utilisateur (6) d'un terminal d'ordinateur à distance sur une liaison de communications (7).

32. Serveur informatique comprenant l'appareil de l'une quelconque des revendications 17 à 31.
